# EUROPEAN PATENT APPLICATION

(11) **EP 3 540 934 A1**
(43) Date of publication of application: **18.09.2019**
(21) Application number: 19157698.2
(22) Date of filing: 18.02.2019
(51) Int. Cl.: H02P 9/00, H02H 7/06

(54) **FAULT RIDE-THROUGH SYSTEM**

(30) Priority: 13.03.2018 GB 201803977
(71) Applicant: Rolls-Royce plc, London SW1E 6AT (GB); MTU Friedrichshafen GmbH, 88045 Friedrichshafen (DE); MTU Onsite Energy GmbH, 86165 Augsburg (DE)
(72) Inventor: Gupta, Amit, Derby, Derbyshire DE24 8BJ (GB); Demharter, Johannes, Derby, Derbyshire DE24 8BJ (GB); Shicong, Yang, Derby, Derbyshire DE24 8BJ (GB); Dasgupta, Souvik, Derby, Derbyshire DE24 8BJ (GB); Kreissl, Michael, Derby, Derbyshire DE24 8BJ (GB); Ukil, Abhisek, Derby, Derbyshire DE24 8BJ (GB)
(74) Representative: Rolls-Royce plc

(57) **Abstract**

There is disclosed a fault ride-through system for use in a power system comprising a synchronous generator driven by a prime mover. The fault ride-through system comprises a mechanical switch connected in parallel with a dynamic power dissipater, wherein the dynamic power dissipater comprises a solid-state switch connected in series with a braking resistor. A controller is configured to control the mechanical switch and the solid-state switch to control the current through the braking resistor, based on received data indicative of one or more operation parameters of the power system.

## Description

The present disclosure relates generally to a fault ride-through system, particularly the enhancement of fault ride-through capability for generator sets in parallel operation with power grids.

Generator sets, which typically comprise a unit transformer and a synchronous generator driven by a prime mover (of, e.g., an engine or turbine), are typically required to comply with strict requirements for connection to the power grid. These requirements are typically defined by a grid code issued by a responsible authority. Many grid codes require the connecting generator sets to stay connected to the grid in periods of lower electric network voltage, i.e. to "ride-through" a period of low electric network voltage.

Periods of lower electric network voltage are typically caused by faults on the far side of a unit transformer in the grid. When a severe fault occurs in the power grid, the energy transmission to the system will be interrupted or reduced momentarily. However, the mechanical power supplied to the generator is almost constant during the fault period due to the slower response in the mechanical system. The unbalanced power in the generator set causes an acceleration of the generator rotor by the prime mover. This acceleration may cause the angle between the generator rotor and the grid to increase, thereby causing the generator to run out of synchronism with the grid. This is known as the rotor angle stability problem or pole slip. Further, a large angle between the generator rotor and the grid generator may cause the generator to be subjected to extremely high currents (a current spike), which may cause the generator to be damaged and disconnected from the grid.

While the generator set itself typically has an internal speed governor which provides some internal capability to reduce acceleration of the rotor during a fault condition, the governor often does not sufficiently reduce the acceleration of the rotor to prevent the generator set from becoming out of synch with the grid by the time the system recovers to pre fault voltage levels. Accordingly, fault ride-through systems have been developed to supplement the internal speed governance of the generator. A fault ride-through system limits the rotor (prime mover or engine) speed during the fault condition by effectively increasing the load at the output of the power system, to maintain the generator at a suitable power output and synchronism during the fault.

It is desired to provide an enhanced fault ride-through system.

According to an aspect, there is provided a fault ride-through system for use in a power system comprising a synchronous generator driven by a prime mover, the fault ride-through system comprising:
a mechanical switch (e.g. a circuit breaker) connected in parallel with a dynamic power dissipater, wherein the dynamic power dissipater comprises a solid-state switch connected in series with a braking resistor; and
a controller configured to receive data indicative of one or more operation parameters of the power system and to control the mechanical switch and the solid-state switch to control an amount of power dissipated by the braking resistor, based on the received data.

The technology described herein provides a fault ride-through system having a dynamic power dissipater comprising a solid-state switch that is connected in series with a braking resistor. In this way, the current spike through the dynamic power dissipater during a fault condition is substantially eliminated and the voltage across the dynamic power dissipater is reduced. This is advantageous in that the high voltage variation and harmonics at the generator terminal during a transient period of a fault is substantially eliminated. Further, a much lower current rating is required for the solid state switch due to the reduced fault current flowing through the solid state switch. This improves reliability and reduces cost of the fault ride-through system.

The controller may be configured to turn OFF the mechanical switch in response to detecting that at least one of the one or more operation parameters is indicative of a fault condition, such that a current generated by the generator is redirected through the dynamic power dissipater. The controller may be configured to control an amount of the redirected current passing through the braking resistor by controlling an amount of the redirected current passing through the solid state switch during a fault condition based on the one or more operation parameters.

The controller may be configured to regulate the speed of the prime mover by controlling the power dissipated by the braking resistor. Regulating the prime mover (e.g. engine) speed by controlling the power absorption of the braking resistor has the effect of minimising or even eliminating the rotor angle stability issue.

The one or more operation parameters of the power system may be generator operation parameters such as the rotor angle or generated voltage (e.g. at the point of common coupling), or other operation parameters of the power system such as operation parameters of the prime mover, e.g. the engine speed. The controller may regulate operation of the generator or engine by controlling these parameters through the power dissipated in the braking resistor.

The one or more operation parameters may comprise at least one of: a voltage detected at a point of common coupling to the power grid; a power generated by the generator; a rotational speed of the prime mover or the generator (alternator); a rotational angle of the prime mover or the generator (alternator).

The amount of redirected current passing through the solid state switch may be controlled based on a difference between a rotational speed of the prime mover and a target rotational speed required to maintain synchronicity between the generator and the power grid.

The power system may be a multi-phase power system comprising three or more phases. The controller may be configured to detect that at least one operation parameter is indicative of a fault condition if: a voltage for at least two phases is less than a pre-determined threshold voltage; and the voltage is less than the threshold voltage for a period of time that is longer than a pre-determined threshold period of time. The voltage may be detected at a point of common coupling to the power grid or terminal of the power system.

This control strategy ensures that the fault ride-through system only activates for severe grid faults which can cause rotor angle stability issue. Less severe disturbances, e.g., where the detected voltage is less than the threshold voltage for less than a pre-determined threshold period of time (which may be indicative of switching of large loads and generators or of fast clearing of faults), will not cause the fault ride-through system to be activated. As a result, a longer life time of the fault ride-through system can be achieved compared to hypothetical arrangements in which a fault ride-through system is activated for less severe faults. Furthermore, the power system of the technology described herein will have less voltage variation and a smaller or substantially zero current/voltage spike. Therefore the minimum fault current will flow through the solid state switch.

The solid state switch may be a bidirectional switch. The mechanical switch may be a controllable circuit breaker. The mechanical switch may be electrical or electromechanical, for example.

The technology described herein also extends to the power system itself. Thus, according to a further aspect, there is provided a power system comprising:
a synchronous generator configured to be driven by a prime mover (e.g. of a (reciprocating) engine) to generate electrical power for a power grid;
a fault ride-through system according to any statement herein;
wherein the fault ride-through system is connected in series between the generator and the power grid.

The power system may further comprise a (e.g. three delta connected) transformer. The fault ride-through system may be connected in series with a primary winding of the transformer on a generator side of the transformer. This further reduces the current rating requirement of the solid state switch. The fault ride-through system may be connected in series with a neutral connection of a secondary winding of the transformer on a grounded side of the secondary winding.

According to a further aspect of the technology described herein, there is provided a method of controlling electrical power supply to a power grid from a power system comprising a synchronous generator driven by a prime mover (e.g. of an engine);
the method comprising:
providing a fault ride-through system in series connection between the generator and the power grid, the fault ride-through system comprising:
   a dynamic power dissipater comprising a solid-state switch connected in series with a braking resistor; and
   a mechanical switch connected in parallel with the dynamic power dissipater; and
controlling the mechanical switch and the solid-state switch to control an amount of power dissipated by the braking resistor, based on (e.g. in coordination with) one or more operation parameters of the power system.

Controlling the mechanical switch and the solid-state switch to control an amount of power dissipated by the braking resistor based on one or more operation parameters may comprise: turning OFF the mechanical switch in response to detecting that at least one of the one or more operation parameters is indicative of a fault condition, such that a current generated by the generator is redirected through the dynamic power dissipater; and controlling an amount of the redirected current passing through the braking resistor by controlling an amount of the redirected current passing through the solid state switch during a fault condition based on the one or more operation parameters.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

Embodiments will now be described by way of example, with reference to the accompanying drawings, in which:
Figure 1 is a schematic illustration of a power system connected to a power grid via a fault ride-through system according to an embodiment of the technology described herein;
Figure 2 is a schematic illustration of a control unit of the fault ride-through system of Figure 1;
Figure 3 is a schematic representation of an operation of the control unit of Figure 2;
Figure 4 is a schematic illustration of a plurality of fault ride-through systems connected in series with the primary windings of a transformer;
Figure 5 is a schematic illustration of a plurality of fault ride-through systems connected in series with the neutral connections of a transformer; and
Figure 6 schematically illustrates four different configurations of a dynamic power dissipater.

In the drawings, like reference numerals will be repeated for like features.

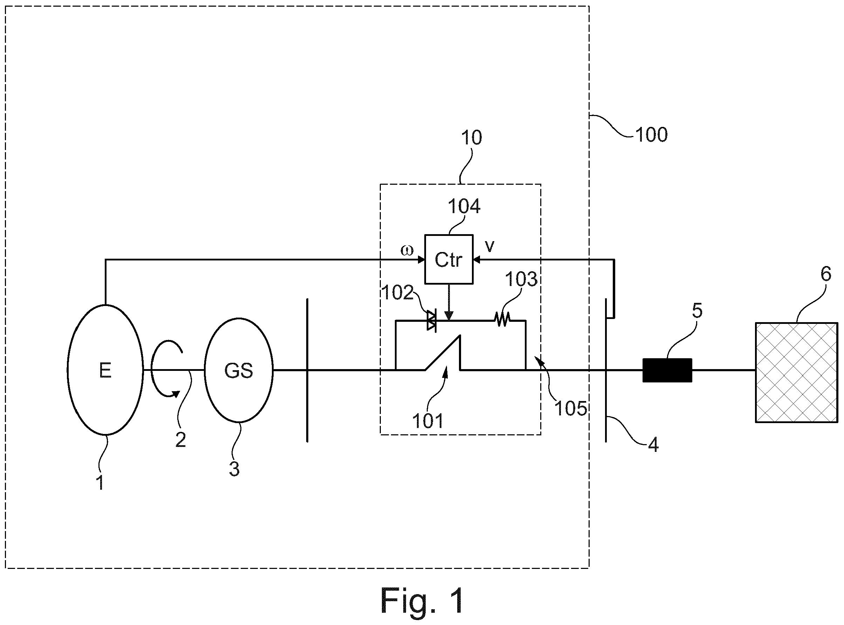

With reference to **Figure 1****,** there is provided a power system 100 for supplying electrical power to a power grid 6. The power system is connected to transmission lines 5 of the power grid 6 at a point of common coupling (PCC) 4, although in other arrangements the power system may be connected to distribution lines of the power grid at a point of common coupling (PCC).

The power system 100 includes a reciprocating engine 1 which drives a synchronous electrical generator 3. In particular, the engine 1 comprises a prime mover 2 which is configured to drive a rotor of the generator 3 relative to its stator windings to generate electrical energy. The engine 1 may be a gas turbine engine.

As can be seen in Figure 1, the generator 3 is connected to the PCC 4 via a fault ride-through system 10 which is operable to limit the prime mover and rotor speed during a fault condition by effectively increasing the load at the output of the power system 100. The fault ride-through system 10 of the present disclosure includes a mechanical switch 101, a solid state switch 102, a braking resistor 103 and a controller 104. The fault ride-through system 10 is connected in series between the generator 3 and the PCC 4.

The solid state switch 102 and the braking resistor 103 of the fault ride-through system 10 are connected in series. The solid state switch 102 is configured to manipulate the amount of current flowing therethrough to the braking resistor 103. The braking resistor 103 operates to slow down the acceleration engine (prime mover) speed by dissipating the energy in the breaking resistor 103. The solid state switch 102 and the braking resistor 103 form a dynamic power dissipater 105 in that the solid state switch 102 dynamically controls the amount of power dissipated by the braking resistor 103 by controlling the amount of current passing thereto.

The dynamic power dissipater 105 is connected in parallel with the mechanical switch 101. When the mechanical switch 101 is switched ON, a current generated by the generator 3 bypasses the dynamic power dissipater 105 and passes to the PCC 4 (or a transformer before it). When the mechanical switch 101 is switched OFF, the current is directed through the dynamic power dissipater 105 before passing to the PCC 4 (or transformer). The mechanical switch 101 in this arrangement is in the form of a circuit breaker, which may help to dissipate sub-transient currents during a fault condition (the initial high amplitude current in the initial few cycles during a fault condition) and/or reduce the losses of the solid state switch 102. The use of a circuit breaker will reduce the rating of the solid state switch, thus enhancing the lift time and reliability of the solid state switch.

The controller 104 is configured to control operation of the mechanical switch 101 and the solid state switch 102 based on parameters that are indicative of the operation of the generator 3. For example, one or more operation parameters are signaled to the controller 104 to monitor the health of the power system in terms of its voltage output and power angle stability. Based on these signals (operation parameters), the controller 104 is able to determine whether a fault has occurred in the power system or grid 6, and regulate the amplitude and synchronicity of the voltage produced by the power system in the event of a fault, using the dynamic power dissipater 105. Correspondingly, the controller 104 is able to allow the power system 100 to operate as normal when it is determined from the operation parameter signals that a fault is not present.

In the arrangement of Figure 1, the controller 104 is configured to receive a signal from the engine 1 that is indicative of the rotational speed of the prime mover 2 or the generator rotor (i.e. the angular frequency *ω*, of the engine 1), and a signal from the PCC 4 that is indicative of the voltage, *V_{pcc},* at the PCC 4.

It will be appreciated that although Figure 1 shows only a single fault ride-through system 10, there may be one such system for each phase of the power distribution system, as appropriate. Further, although Figure 1 shows an engine 1 connected to the generator 3, any rotary and synchronous drive mechanism, such as that of any type of reciprocating engine (any fuel, any gas), any type of turbine (any fuel, any gas) or any type of motor (any type of energy to be converted into rotational energy) could be used to drive the prime mover 2.

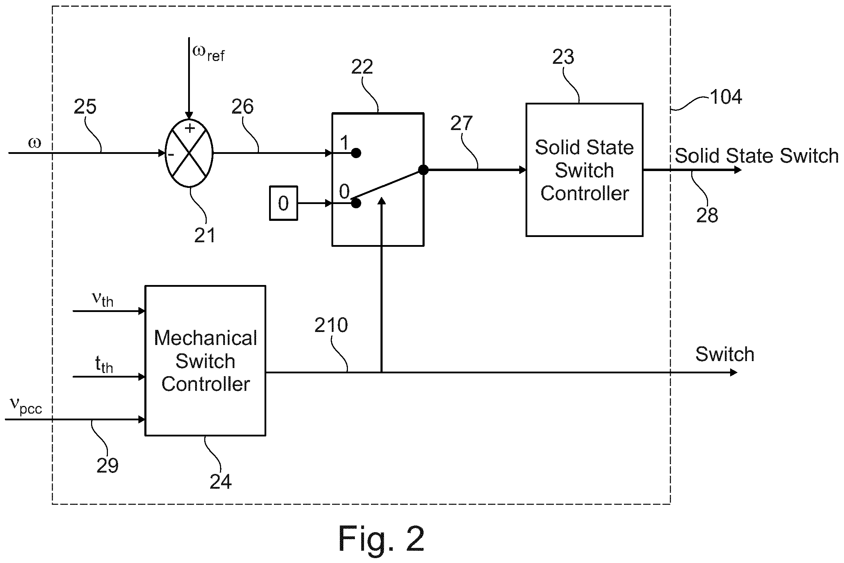

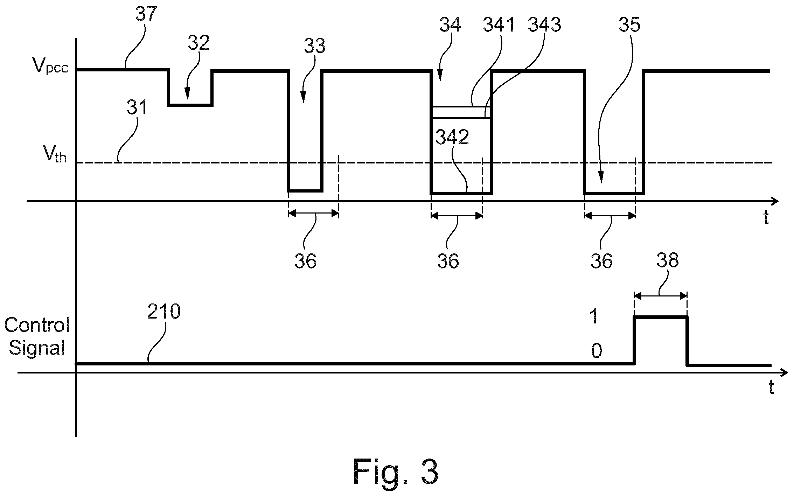

Operation of the controller 104 will now be described further with respect to Figures 2 and 3.

**Figure 2** shows controller 104 of Figure 1 in greater detail. As shown, the controller 104 comprises a governor 21, a relay 22, a solid state switch controller 23 and a mechanical switch controller 24.

During operation, the governor 21 receives a signal 25 corresponding to the current angular frequency, *ω*, of the engine 1 which indicates the rotational speed of the prime mover 2 or generator rotor. The governor 21 also retrieves, e.g. from memory, a reference angular frequency, *ω_{ref}*, which indicates a pre-defined target rotational speed (angular frequency) required to maintain synchronicity with the grid 6. The reference angular frequency may be defined in the grid code, for example.

The governor 21 compares the current angular frequency with the reference angular frequency to determine a difference there between. However, in the present arrangement, the governor 21 will conditionally pass a signal 26 indicating the difference value to the solid state switch controller 23 via relay 22, where that information is used by the solid state switch controller 23 to provide enhanced control of the engine speed using the dynamic brake resistor 105.

Governor 21 may be an existing governor of the power system which is configured under normal operation to measure and regulate the speed of the engine. In such arrangements, controlling an amount of power dissipated by the braking resistor 103 based on a difference between the current angular frequency and the reference angular frequency may be advantageous in that it utilizes information that the power system 100 is already configured to determine, without having to provide additional monitoring equipment.

Relay 22 is configured to be positioned in either an OFF position indicated as the value "0" in Figure 2 or an ON position indicated as the value "1". In the ON position, the difference value (which may be a positive or negative value) is passed to solid state switch controller 23 where it is used to control operation of the solid state switch 102. In the OFF position, the difference value is not passed to the solid state switch controller 23.

If the difference value is passed to solid state switch controller 23, the solid state switch controller 23 determines, based on the difference between the current angular frequency and the reference angular frequency, the power consumption required by the braking resistor 103 to adjust the engine angular frequency *ω* in line with the reference angular frequency *ω_{ref}*. Based on this determination, the solid state switch controller 23 issues a control signal 28 to the solid state switch 102 to control the current through the braking resistor 103, and therefore its power consumption.

By controlling the solid state switch 102, the controller 104 can set the amount of (engine/prime mover) power dissipated (consumed) by the braking resistor 103 to a level where the power output to the grid 6 matches the pre-fault power output and the acceleration of engine rotor is restricted. In this way, the fault ride-through system 10 ensures that the power output to the grid remains within an acceptable operating window defined by the grid code and that the rotor does not accelerate out of synchronism with the grid.

Mechanical switch controller 24 is operable to activate and deactivate the dynamic power dissipater 105 by controlling mechanical switch 101 and relay 22 between their ON and OFF states. In particular, the fault ride-through system 10 is activated by the mechanical switch operator 24 sending a signal 210 to turn relay 22 to the ON position and turn the mechanical switch 101 to the OFF position at the same time, although in other arrangements relay 22 may be turned ON before mechanical switch 101 is turned OFF (or before mechanical switch controller 24 detects a fault condition). Correspondingly, the fault ride-through system 10 is de-activated by the mechanical switch controller 24 sending a signal 210 to turn relay 22 to the OFF position and turn mechanical switch 101 to the ON position.

The mechanical switch controller 24 activates the fault ride-through system 10 when a fault on the connected power grid meets a pre-defined condition, and any suitable condition may be pre-defined for this purpose. However, in the arrangement shown in Figure 2, the mechanical switch controller 24 does this based on three inputs: a voltage at the PCC, *V_{pcc}*; a voltage threshold value, *vₜₕ,* indicating a predetermined voltage value for the PCC voltage; and a time threshold value, *tₜₕ.* In particular, where the power system 100 is a three-phase power system, the mechanical switch controller 24 activates the fault ride-through system 10 when a fault on the connected power grid causes the voltage at the PCC to drop below the voltage threshold value for at least two phases of the power system and for a duration that is longer than the time threshold value. This operation will now be described further with respect to Figure 3.

**Figure 3** shows two plots: a first plot of PCC voltage 37 for three phases of the power distribution system; and a second plot showing the control signal 210 issued by the mechanical switch controller 24 shown in Figure 2 against time. Both plots show the various signals along the same time scale.

When a fault is present in the grid, the voltage 37 drops by an amount that is dependent on the severity of the fault. Four successive faults are shown by arrows 32, 33, 34 and 35 in Figure 3.

During fault 32 of Figure 3, the fault voltage 37 for all three phases remains above the threshold voltage 31 (*Vₜₕ*) and the mechanical switch controller 24 will not send a control signal 210 to activate the fault ride-through system 10.

Similarly, when the fault voltage 37 for all three phases are below the threshold voltage 31 but the fault duration is shorter than the threshold time 36, as shown in fault 33, no control signal is sent to activate the fault ride-through system 10.

When a fault, such as fault 34 of Figure 3, lasts longer than the threshold time duration 36, but the voltage 342 for only one phase is below the threshold voltage 31 while the voltages 341, 343 for two phases are above the threshold 31, the mechanical switch controller 24 will not send a control signal 210 to activate the fault ride-through system 10.

However, during fault 35, it can be seen that the fault voltage 37 for all three phases is less than the threshold voltage 31 and has a duration that is longer than the threshold time duration 36. In such cases, the control signal 210 is issued to activate the fault ride-through system 10. This is shown in Figure 3 by the control signal moving from a value of "0" to "1" substantially once the threshold time duration 36 has elapsed.

The control signal 210 to activate the fault ride-through system is sent for a minimum duration 38 during which the fault ride-through system 10 remains activated. The minimum duration 38 is set to ensure that the generator remains stable and connected to the grid for a sufficient amount of time to clear the fault 35.

It will be appreciated that although Figure 3 shows that the mechanical switch controller 24 will only issue an activation command 210 if the fault voltage 37 for all three phases is less than the threshold voltage 31 for a sufficient duration of time, this is not required. Any suitable condition may be pre-defined for the fault ride-through system.

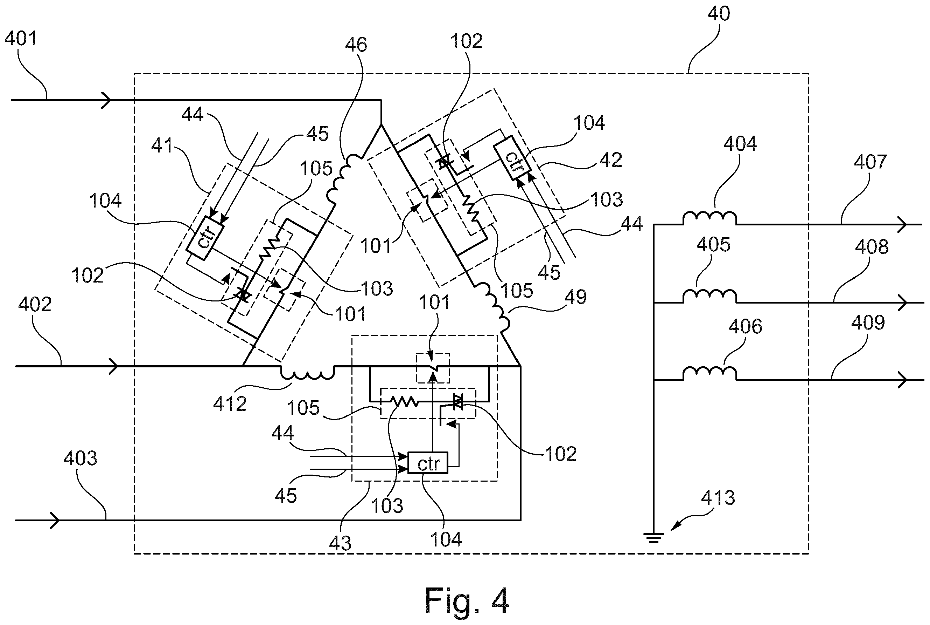

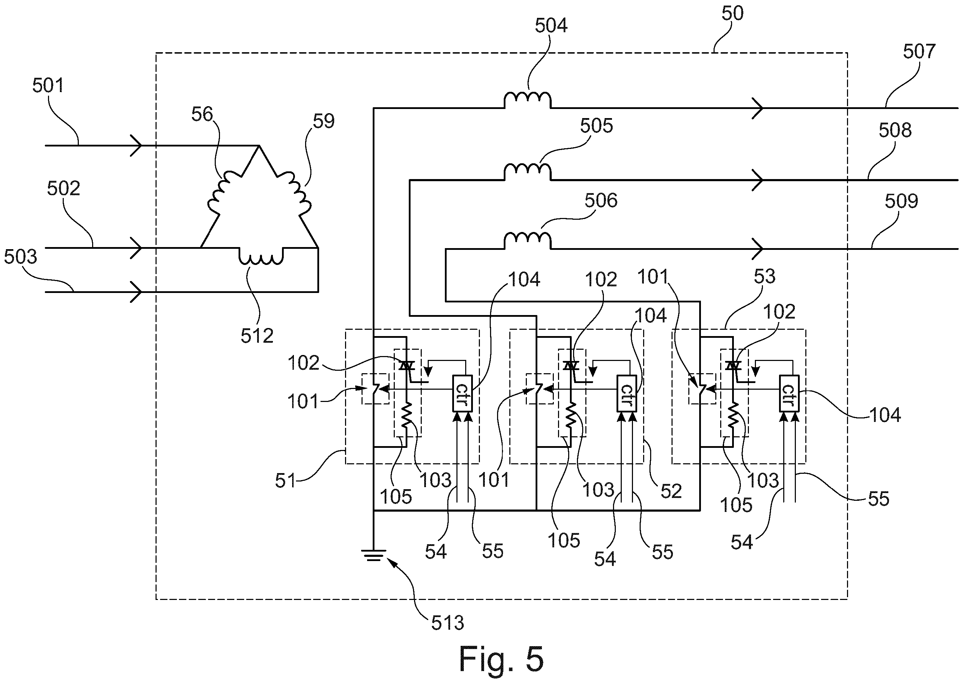

As mentioned above, the fault ride-through system of the technology described herein may be fitted to a power system between the synchronous generator and the power grid. However, in an embodiment the fault ride-through system is connected in series with a unit transformer between the generator and the power grid. This will now be described with respect to Figures 4 and 5.

**Figure 4** is a schematic illustration of a unit transformer having a plurality of fault ride-through systems as described with respect to Figures 1 to 3.

In the arrangement shown, the unit transformer 40 is in the form of a delta-wye transformer, which is a three-phase transformer that employs three delta-connected primary windings 46, 49 and 412 and wye/star connected secondary windings 404, 405 and 406. Such a transformer may be used to supply three-phase electrical power to commercial and industrial sites, for example. Each primary winding 46, 49, 412 is connected to a respective supply line 401, 402, 403 of a generator and will receive electrical power corresponding to a single phase of the generator. The secondary windings 404, 405, 406, provide a stepped-up, three-phase supply to the grid along lines 407, 408, 409, respectively. The voltage supplied to the grid from secondary windings 404, 405, 406 is measured relative to ground 413.

As can be seen in Figure 4, three fault ride-through systems 41, 42, 43 are connected in series with the primary windings 46, 49, 412 of the transformer 40, wherein each fault ride-through systems 41, 42, 43 is connected along one arm of the three arms forming the delta-connection. Each fault ride-through system 41, 42, 43 is connected on the generator side of the primary windings 46, 49, 412.

Each controller 104 of a respective fault ride-through system 41, 42, 43 receives a first signal 44 indicating the voltage detected at the PCC, which in this embodiment is a three-phase voltage, and uses the voltage to determine whether a fault condition exists as described above with respect to Figure 2. Each controller 104 also receives a second signal 45 indicating the angular frequency of the prime mover (engine) and controls the solid state switch 102 based on a difference between the current angular frequency and a reference angular frequency, as described with respect to Figure 2. If a fault condition exists, each (all) fault ride-through system 41, 42, 43 will be activated by turning OFF the mechanical switches 101. The mechanical switches 101 may be linked to a three pole controllable circuit breaker for this purpose.

It will be appreciated that although Figure 4 shows three separate controllers 104 for the plurality of fault ride-through systems 41, 42, 43, in other arrangements there may be a centralised controller that will issue a control signal to activate the plurality of fault ride-through systems 41, 42, 43 in the event of a fault being determined centrally at the controller.

By activating the fault ride-through systems 41, 42, 43, the controller(s) 104 not only regulates the speed of the engine, but also the amount of current that passes to the primary windings 46, 49, 412 to induce a current in the secondary windings 404, 405, 406. This will in turn control the amount of voltage that is supplied to the power grid via the point of common coupling during a fault condition.

**Figure 5** schematically illustrates another arrangement of a unit transformer having a plurality of fault ride-through systems as described with respect to Figures 1 to 3.

The transformer 50 of Figure 5 is similar to that of Figure 4 in that it is a delta-wye transformer having three delta-connected primary windings 56, 59 and 512 and wye/star connected secondary windings 504, 505 and 506. However, the transformer 50 differs from that of Figure 4 in that a plurality of fault ride-through systems 51, 52, 53 are connected in series with the neutral connections of the secondary windings 504, 505 and 506. Each fault ride-through system 51, 52, 53 is connected between the secondary windings and ground 513. In this way, further current rating reduction for the solid state switch can be achieved. Placing fault ride-through systems 51, 52, 53 in series with the secondary windings 504, 505 and 506 will reduce the current rating because the secondary windings are high voltage and low current. Further, where the secondary windings are configured as star connections, the phase currents are 1.732 times lower than the line current.

Similarly to the arrangement of Figure 4, the fault ride-through systems 51, 52, 53 of Figure 5 control the amount of voltage that is supplied to the power grid via the point of common coupling during a fault condition. However, the fault ride-through systems 51, 52, 53 of Figure 5 do this by controlling the amount of induced current at the secondary windings 504, 505, 506 that passes to the ground connection 513, and in turn the voltage that is supplied to the grid relative to the ground 513.

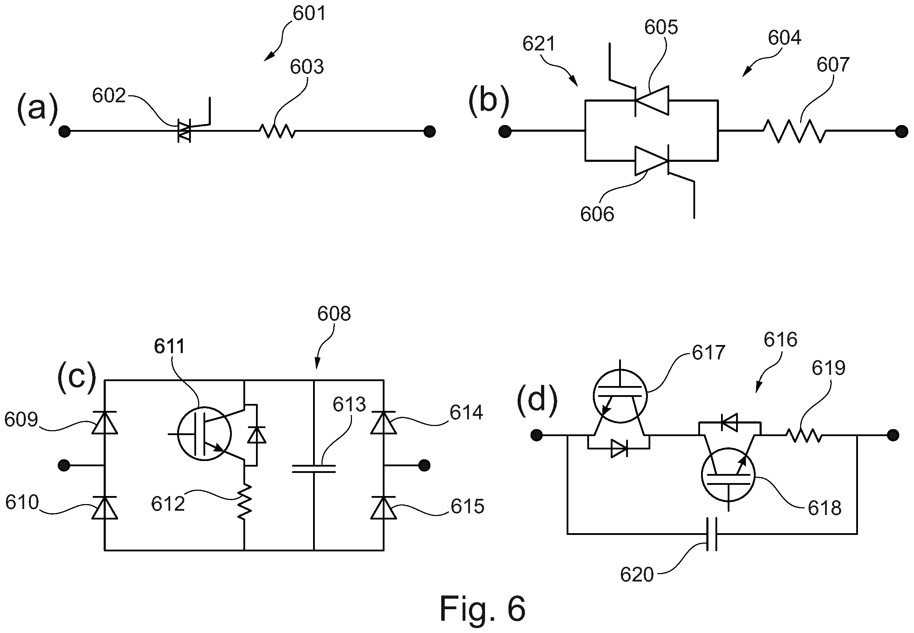

While Figures 1 to 5 show dynamic power dissipaters having a solid state switch and a braking resistor 103 only, it will be appreciated that the dynamic power dissipaters may comprise one or more additional circuit elements. Examples of such configurations will now be described with respect to Figure 6.

**Figure 6** schematically illustrates four different configurations of a dynamic power dissipater.

Figure 6a illustrates a first configuration of a dynamic power dissipater 601 corresponding to that shown in Figures 1 to 5, wherein a bidirectional triode thyristor (TRIAC) is used to construct a bi-directional solid state switch 602. A TRIAC is a three terminal component that conducts current in either direction when triggered. As shown, the TRIAC switch 602 is connected in series with a braking resistor 603 to form the dynamic power dissipater 601.

Figure 6b illustrates a second configuration wherein a first silicon controlled rectifier (SCR) 605 and a second SCR 606 is used to construct a solid state switch 606 which is in series with a braking resistor 607 to form the dynamic power dissipater 604. It can be seen that the first SCR 605 and the second SCR 606 are connected in parallel such that only one SCR 605, 606 is in series with the braking resistor 607 in each half cycle. In this way, even if one of the SCRs 605, 606 is damaged, the other SCR 506, 606 is able to work with the braking resistor 607 to at least partially consume the power generated, thereby providing a dynamic power dissipater with greater reliability.

The dynamic power dissipaters 601, 604 of Figures 6a and 6b are suitable for low frequency switching control. However, when high frequency control is required for the solid state switch, one or more insulated-gate bipolar transistors (IGBTs) can be used to construct the dynamic power dissipater, as will now be described.

In Figure 6c, there is shown a dynamic power dissipater 608 having a single IGBT 611 connected in series with a braking resistor 612. The dynamic power dissipater 608 also comprises four diodes 609, 610, 614, 615 to ensure that current passes through the IGBT 611 before the braking resistor 612. A capacitor 613 is also connected in parallel with the IGBT 611 and braking resistor 612 to create an alternative current path when the IGBT 611 is in an OFF state, although this is not required.

Figure 6d illustrates a dynamic power dissipater 616 having two IGBTs 617, 618 connected in series with a braking resistor 619. Similarly to Figure 6c, a capacitor 620 is again connected in parallel with the IGBTs 617, 618 and braking resistor 619 to create an alternative current path when the IGBTs 617, 618 are in the OFF state, although this is not required.

In view of the above, it can be seen that the technology described herein provides a fault ride-through system which reduces the high voltage variation and harmonics at the generator terminal during the fault transient period. Further, the fault current flow through the solid state switch is largely reduced, and therefore a much lower current rating is required for the solid state switch. This improves reliability and reduces cost of manufacture.

It will be understood that the technology described herein is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

## Claims

1. A fault ride-through system (10) for use in a power system (100) comprising a synchronous generator (3) driven by a prime mover (2), the fault ride-through system (10) comprising:
a mechanical switch (101) connected in parallel with a dynamic power dissipater (105), wherein the dynamic power dissipater (105) comprises a solid-state switch (102) connected in series with a braking resistor (103); and
a controller (104) configured to receive data indicative of one or more operation parameters of the power system (100) and to control the mechanical switch (101) and the solid-state switch (102) to control an amount of power dissipated by the braking resistor (103), based on the received data.

2. A fault ride-through system (10) as claimed in claim 1, wherein the controller (104) is configured to:
turn OFF the mechanical switch (101) in response to detecting that at least one of the one or more operation parameters is indicative of a fault condition, such that a current generated by the generator (3) is redirected through the dynamic power dissipater (105); and
control an amount of the redirected current passing through the braking resistor (103) by controlling an amount of the redirected current passing through the solid state switch during a fault condition based on the one or more operation parameters.

3. A fault ride-through system (10) as claimed in claim 2, wherein the amount of redirected current passing through the solid state switch is controlled based on a difference between a rotational speed of the prime mover (2) and a target rotational speed required to maintain synchronicity between the generator (3) and the power grid (6).

4. A fault ride-through system (10) as claimed in claim 1, 2 or 3, wherein the controller (104) is configured to regulate the speed of the prime mover (2) by controlling the power dissipated by the braking resistor (103).

5. A fault ride-through system (10) as claimed in any preceding claim, wherein the one or more operation parameters comprises at least one of: a voltage detected at a point of common coupling (4) to the power grid (6); a power generated by the generator (3); a rotational speed of the prime mover or the generator (2); a rotational angle of the prime mover or the generator (2).

6. A fault ride-through system (10) as claimed in any preceding claim, wherein the power system (100) is a multi-phase power system (100) comprising three or more phases; and
the controller (104) is configured to detect that at least one operation parameter is indicative of a fault condition if:
a voltage for at least two phases is less than a pre-determined threshold voltage; and
the voltage is less than the threshold voltage for a period of time that is longer than a pre-determined threshold period of time.

7. A fault ride-through system (10) as claimed in claim 6, wherein the voltage is detected at a point of common coupling (4) to the power grid (6).

8. A fault ride-through system (10) as claimed in any preceding claim, wherein the solid state switch is a bidirectional switch.

9. A fault ride-through system (10) as claimed in any preceding claim, wherein the mechanical switch (101) is a controllable circuit breaker.

10. A power system (100) comprising:
a synchronous generator (3) configured to be driven by a prime mover (2) to generate electrical power for a power grid (6);
a fault ride-through system (10) as claimed in any preceding claim;
wherein the fault ride-through system (10) is connected in series between the generator (3) and the power grid (6).

11. A power system (100) as claimed in claim 10, further comprising a transformer;
wherein the fault ride-through system (10) is connected in series with a primary winding of the transformer on a generator (3) side of the transformer.

12. A power system (100) as claimed in claim 10, wherein the fault ride-through system (10) is connected in series with a neutral connection of a secondary winding of the transformer on a grounded side of the secondary winding.

13. A method of controlling electrical power supply to a power grid (6) from a power system (100) comprising a synchronous generator (3) driven by a prime mover (2);
the method comprising:
providing a fault ride-through system (10) in series connection between the generator (3) and the power grid (6), the fault ride-through system (10) comprising:
a dynamic power dissipater (105) comprising a solid-state switch (102) connected in series with a braking resistor (103); and
a mechanical switch (101) connected in parallel with the dynamic power dissipater (105); and
controlling the mechanical switch (101) and the solid-state switch (102) to control an amount of power dissipated by the braking resistor (103), based on one or more operation parameters of the power system (100).

14. A method as claimed in claim 13, wherein controlling the mechanical switch (101) and the solid-state switch (102) to control an amount of power dissipated by the braking resistor (103) based on one or more operation parameters comprises:
turning OFF the mechanical switch (101) in response to detecting that at least one of the one or more operation parameters is indicative of a fault condition, such that a current generated by the generator (3) is redirected through the dynamic power dissipater (105); and
controlling an amount of the redirected current passing through the braking resistor (103) by controlling an amount of the redirected current passing through the solid state switch during a fault condition based on the one or more operation parameters.
